# EUROPÄISCHE PATENTSCHRIFT

(11) **EP 1 254 350 B1**
(45) Veröffentlichungstag und Bekanntmachung des Hinweises auf die Patenterteilung: **04.08.2004**
(21) Anmeldenummer: 01984802.7
(22) Anmeldetag: 05.12.2001
(51) Int. Cl.: G01C 21/36, G08G 1/0962

(54) **NAVIGATIONSVORRICHTUNG UND NAVIGATIONSVERFAHREN FÜR EINEN KRAFTWAGEN**
NAVIGATION DEVICE AND NAVIGATION METHOD FOR A MOTOR VEHICLE
DISPOSITIF ET PROCEDE DE NAVIGATION POUR UN VEHICULE A MOTEUR

(30) Priorität: 08.12.2000 DE 10061077
(43) Veröffentlichungstag der Anmeldung: 06.11.2002
(73) Patentinhaber: AUDI AG, 85045 Ingolstadt (DE)
(72) Erfinder: KREITMEYR, Albert, 85139 Wettstetten (DE)
(74) Vertreter: Thielmann, Frank
(86) Internationale Anmeldenummer: PCT/EP2001/014234
(87) Internationale Veröffentlichungsnummer: WO 2002/046700

(56) Entgegenhaltungen:
- US-A- 5 406 492
- US-A- 5 935 193
- PATENT ABSTRACTS OF JAPAN vol. 1999, no. 05, 31. Mai 1999 (1999-05-31) & JP 11 030525 A (NEC HOME ELECTRON LTD), 2. Februar 1999 (1999-02-02)

## Beschreibung

Die vorliegende Erfindung betrifft eine Navigationsvorrichtung für einen Kraftwagen, wobei die Navigationsvorrichtung eine akustische Ausgabeeinheit aufweist, durch die Fahranweisungen als Audiosignale abgebbar sind. Die Erfindung betrifft auch ein entsprechendes Verfahren.

Eine derartige gattungsgemäße Navigationsvorrichtung ist aus dem Dokument US 5,935,193 bekannt. Das in diesem Dokument beschriebene Autonavigationssystem weist ein Lautsprecherpaar auf, wobei ein Lautsprecher auf der linken Seite und ein Lautsprecher auf der rechten Seite eines Fahrers innerhalb eines Autos angeordnet sind. Eine Ausgabeeinheit, die mit dem rechten und dem linken Lautsprecher assoziiert ist, sorgt je nach empfohlener Fahrtrichtung für ein Audiosignal aus dem rechten oder dem linken Lautsprecher. Dabei wird für die Richtung "links" bzw. "rechts" jeweils eine weibliche bzw. eine männliche Stimme verwendet. Die Fahrtrichtungsempfehlung "links abbiegen" wird folglich mit einer weiblichen Stimme aus dem linken Lautsprecher erzeugt, während eine Fahrtrichtungsempfehlung "rechts abbiegen" mit einer männlichen Stimme aus dem rechten Lautsprecher erzeugt wird. Dies funktioniert auch unter Beimischung von Stereomusik.

Nachteilig an diesem Autonavigationssystem ist jedoch, daß der Fahrer ausschließlich zwischen den Quellrichtungen "rechts" und "links" unterscheiden kann, ohne daß er durch die gewählte Quellrichtung eine Information dazu erhält, ob er beispielsweise sofort oder erst in einiger Entfernung abbiegen soll oder ob er einer leichten Biegung oder etwa einer scharfen Biegung folgen soll.

Die US 5,406,492 betrifft ein Navigationssystem, das Fahranweisungen aus unterschiedlichen Quellrichtungen erzeugen kann, wobei die jeweils verwendete Quellrichtung mit der aus dieser Richtung wirkenden Fahranweisung in einem inhaltlichen Zusammenhang steht. In einem Ausführungsbeispiel ist weiterhin beschrieben, dass neben der Quellrichtung auch die Lautstärke der Fahranweisung variiert werden kann.

Der vorliegenden Erfindung liegt die Aufgabe zugrunde, eine gattungsgemäße Navigationsvorrichtung für einen Kraftwagen derart weiterzubilden, daß ein Fahrer des Kraftwagens allein durch die Quellrichtung eines Audiosignals detailliertere Informationen zur empfohlenen Fahrtrichtung erhält. Es ist weiterhin Aufgabe der Erfindung, ein entsprechendes Navigationsverfahren bereitzustellen.

Diese Aufgabe wird gelöst durch ein Navigationsverfahren mit den Merkmalen von Patentanspruch 1 sowie durch eine Navigationsvorrichtung mit den Merkmalen von Patentanspruch 4.

Bei einem erfindungsgemäßen Navigationsverfahren wirkt ein Audiosignal für eine Fahranweisung derart in zeitlicher Abfolge aus mindestens zwei unterschiedlichen Quellrichtungen auf den Fahrer, dass für den Fahrer der Eindruck einer stetig wandernden Quellrichtung entsteht.

Eine erste vorteilhafte Weiterbildung der erfindungsgemäßen Navigationsvorrichtung sieht vor, daß die Ausgabeeinheit mindestens drei Lautsprecher aufweist. Folglich können die ohnehin häufig in einem Kraftwagen vorhandenen vier Lautsprecher als Teil der Ausgabeeinheit verwendet werden.

Eine von dem Fahrer empfundene Quellrichtung kann beispielsweise "vorne rechts" oder "rechts" oder "hinten rechts" oder "vorne links" oder "links" oder "hinten links" sein. Gerade diese Quellrichtungen sind mit mindestens drei Lautsprechern besonders leicht zu erzeugen und können von dem Fahrer ausreichend unterschieden werden.

Eine weitere Ausgestaltung der Erfindung sieht vor, daß aus einer von dem Fahrer empfundenen Quellrichtung "vorne rechts" oder "rechts" oder "hinten rechts" ein Audiosignal für eine Fahranweisung erzeugbar ist, die eine Information wie "rechts abbiegen" oder "rechts halten" umfaßt.

Ebenso kann aus einer vom Fahrer empfundenen Quellrichtung "vorne links" oder "links" oder "hinten links" ein Audiosignal für eine Fahranweisung erzeugbar sein, die eine Information wie "links abbiegen" oder "links halten" umfaßt.

In einer weiteren besonders vorteilhaften Weiterbildung der Erfindung kann aus einer von dem Fahrer empfundenen Quellrichtung "hinten", insbesondere "hinten links" oder "hinten rechts", ein Audiosignal für eine Fahranweisung erzeugbar sein, die eine Information wie "scharf abbiegen" oder "sofort abbiegen" oder "sofort Spur wechseln" umfaßt. Diese Quellrichtung kann folglich darüber informieren, daß eine Handlung in unmittelbarem Anschluß an das Audiosignal durchzuführen ist. Sie gibt daher Auskunft über eine zeitliche Komponente. Ebenso kann diese Quellrichtung allerdings auch Auskunft über den Winkel geben, in dem abzubiegen ist.

Ähnliches gilt für eine weitere Ausgestaltung der Erfindung, die vorsieht, daß aus einer vom Fahrer empfundenen Quellrichtung "vorne", insbesondere "vorne links" oder "vorne rechts", ein Audiosignal für eine Fahranweisung erzeugbar ist, die eine Information wie "einer leichten Biegung folgen" oder "weiter vorne abbiegen" oder "weiter vorne Spur wechseln" umfaßt.

Das aus einer von dem Fahrer empfundenen Quellrichtung "seitlich", insbesondere "rechts" oder "links", kommende Audiosignal kann für eine Fahranweisung erzeugbar sein, die eine Information wie "abbiegen" oder "Spur wechseln" umfaßt.

Weitere Vorteile der Erfindung ergeben sich aus den im folgenden beschriebenen Ausführungsformen der Erfindung.

Es zeigen:
- Fig. 1: eine schematische, teilweise geschnitten dargestellte Draufsicht auf den Innenraum eines Kraftwagens, der eine erste Ausführungsform der erfindungsgemäßen Navigationsvorrichtung aufweist;
- Fig. 2: eine schematisch dargestellte Draufsicht auf eine Straßenführung mit einem Kraftwagen, der eine zweite Ausführungsform der erfindungsgemäßen Navigationsvorrichtung aufweist; und
- Fig. 3: eine schematisch dargestellte Draufsicht auf eine weitere Straßenführung mit einem Kraftwagen, der eine dritte Ausführungsform der erfindungsgemäßen Navigationsvorrichtung aufweist.

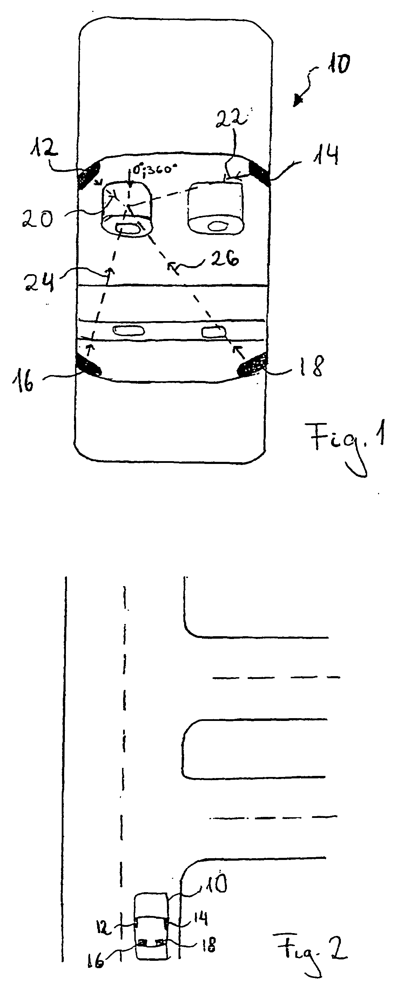

Fig. 1 zeigt, schematisch und teilweise geschnitten dargestellt, den. Innenraum eines Kraftwagens 10, in dem eine erste Ausführungsform der erfindungsgemäßen Navigationsvorrichtung angeordnet ist. Diese Ausführungsform weist eine akustische Ausgabeeinheit auf, die ein DSP (digital signal processing)-System umfaßt und vier Lautsprecher 12, 14, 16 und 18 aufweist. Diese Lautsprecher 12, 14, 16 und 18 sind vorne links, vorne rechts, hinten links und hinten rechts innerhalb des Kraftwagens 10 angeordnet. Durch diese Ausgabeeinheit sind Audiosignale aus nahezu jeder beliebigen, vom Fahrer empfundenen Quellrichtung zwischen 0° und 360° erzeugbar. Damit ist für den Fahrer beispielsweise eine Unterscheidung zwischen den Quellrichtungen "vorne links" 20, "vorne rechts" 22, "hinten links" 24 und "hinten rechts" 26 möglich. Die Anordnung der Lautsprecher 10, 12, 14 und 16 innerhalb des Kraftwageninnenraums kann der individuellen Kraftwagengestaltung angepaßt werden. Außerdem können mehr als vier Lautsprecher vorgesehen sein, um die Klangqualität noch zu verbessern.

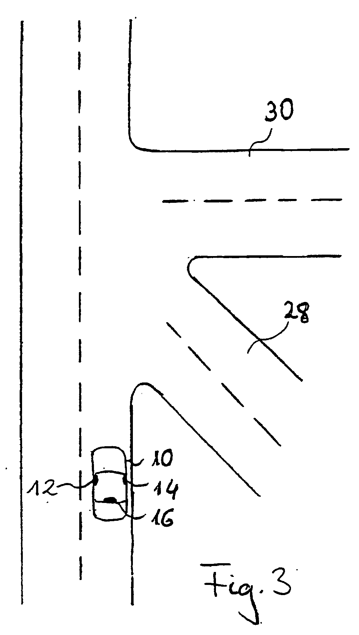

Fig. 2 zeigt eine Straßenführung mit einem Kraftwagen 10, der eine zweite Ausführungsform der erfindungsgemäßen Navigationsvorrichtung aufweist. Diese Ausführungsform umfaßt eine Ausgabeeinheit mit zwei vorderen Lautsprechem 12 und 14, die in die beiden Vordertüren des Kraftwagens integriert sind, und mit zwei hinteren Lautsprechern 16 und 18, die aus einer Ablage hinter den Rucksitzen herausragen. Auch durch diese Ausführungsform der erfindungsgemäßen Navigationsvorrichtung kann die vom Fahrer empfundene Quellrichtung des durch die Ausgabeeinheit erzeugten Audiosignals nahezu beliebig ausgerichtet werden. Befindet sich der Kraftwagen 10 in der in Fig. 2 dargestellten Position, kann beispielsweise durch die Ausgabeeinheit ein Audiosignal für eine Information "sofort rechts abbiegen" erfolgen. Das Audiosignal kann dabei ein Sprachsignal oder eine Abfolge von Tönen bzw. Geräuschen sein, die diese Information kodieren und dem Fahrer bekannt sind Dieses Audiosignal wird aus einer vom Fahrer empfundenen Quellrichtung "hinten rechts" erzeugt. Diese Quellrichtung veranlaßt den Fahrer nahezu unabhängig von dem Inhalt der durch das Audiosignal übermittelten Information sofort nach rechts abzubiegen.

Wird durch die akustische Ausgabeeinheit ein Audiosignal für eine Fahranweisung erzeugt, die eine Information wie "weiter vom rechts abbiegen" umfaßt, so wird der erste Teil dieses Audiosignals mit der Information "weiter vorn" nahezu ausschließlich durch den Lautsprecher 14 in der rechten Vordertür des Kraftwagens 10 erzeugt, während der zweite Teil des Audiosignals mit der Information "rechts abbiegen" dann aus einer Quellrichtung "hinten rechts" von dem rechten, hinteren Lautsprecher 18 erzeugt wird. Dieser Übergang zwischen dem ersten Teil und dem zweiten Teil des Audiosignals ist so gestaltet, daß für den Fahrer der Eindruck einer von vorne nach rechts hinten wandernden Quellrichtung entsteht.

Fig. 3 zeigt eine weitere Straßenführung mit einem Kraftwagen 10, der eine dritte Ausführungsform der erfindungsgemäßen Navigationsvorrichtung aufweist. Diese Ausführungsform umfaßt eine Ausgabeeinheit mit nur drei Lautsprechern 12, 14 und 18, wobei zwei Lautsprecher innerhalb des Kraftwageninnenraums vorne links 12 und vorne rechts 14 angeordnet sind, während ein dritter Lautsprecher 16 hinter den Rücksitzen mittig angeordnet ist. Auch durch diese Ausgabeeinheit kann ein Audiosignal aus nahezu jeder beliebigen Quellrichtung erzeugt werden. Während ein Audiosignal für eine Fahranweisung "scharf rechts abbiegen" so durch den vorderen rechten Lautsprecher 14 und den hinteren Lautsprecher 16 erzeugt wird, daß die vom Fahrer empfundene Quellrichtung "hinten rechts" ist, kann ein Audiosignal für eine Fahranweisung "einer leichteren Biegung folgen" ausschließlich durch den vorderen rechten Lautsprecher 14 erzeugt werden, so daß auch die vom Fahrer empfundene Quellrichtung "rechts vorne" ist. Der Fahrer des in Fig. 3 dargestellten Kraftwagens 10 weiß also schon alleine aufgrund der gewählten Quellrichtung, in welche der beiden Straßen 28 oder 30 er rechts abbiegen soll.

Weitere Veränderungen, Modifikationen oder Kombinationen der oben beschriebenen Ausführungsformen sind für den Fachmann offensichtlich und fallen ebenso unter den Schutzumfang der beigefügten Ansprüche. Dies gilt insbesondere für weitere, für den Fachmann selbstverständliche Fahranweisungen.

## Patentansprüche

1. Navigationsverfahren für einen Kraftwagen, wobei Fahranweisungen als Audiosignale abgegeben werden, wobei die Audiosignale aus mindestens vier verschiedenen, für einen Fahrer unterscheidbaren Quellrichtungen (20, 22, 24, 26) auf den Fahrer wirken, wobei die mindestens vier Quellrichtungen (20, 22, 24, 26) in einem inhaltlichen Zusammenhang zu den jeweils in diesen Quellrichtungen (20, 22, 24, 26) als Audiosignale abgegebenen Fahranweisungen stehen, wobei ein Audiosignal jeweils Teilsignale umfasst,
**dadurch gekennzeichnet,**
**dass** die Teilsignale des Audiosignals für die Fahranweisung derart in zeitlicher Abfolge aus mindestens zwei unterschiedlichen Quellrichtungen auf den Fahrer wirken, dass für den Fahrer der Eindruck entsteht, dass das Audiosignal aus einer stetig wandernden Quellrichtung erzeugt wird.

2. Navigationsverfahren nach Anspruch 1,
**dadurch gekennzeichnet,**
**dass** die Audiosignale aus den mindestens vier verschiedenen Quellrichtungen (20, 22, 24, 26) durch eine Ausgabeeinheit mit mindestens drei Lautsprechern (12, 14, 16, 18) erzeugt werden.

3. Navigationsverfahren nach einem der vorhergehenden Ansprüche,
**dadurch gekennzeichnet,**
**dass** eine von dem Fahrer empfundene Quellrichtung "vorne rechts" oder "rechts" oder "hinten rechts" oder "vorne links" oder "links" oder "hinten links" ist.

4. Navigationsvorrichtung für einen Kraftwagen zur Durchführung eines Navigationsverfahrens nach einem der Ansprüche 1 bis 3.

## Claims

1. Navigation method for a motor vehicle, in which driving instructions are output as audio signals, the audio signals make an impression on the driver from at least four different source directions (20, 22, 24, 26) distinguishable by the driver, the at least four source directions (20, 22, 24, 26) are logically related to the respective driving instructions output as audio signals in these source directions (20, 22, 24, 26), and an audio signal includes respective partial signals, **characterised in that** the partial signals of the audio signal for the driving instructions make an impression on the driver from at least two different source directions in a time sequence in such a manner that the driver is given the impression that the audio signal is generated from one constantly moving source direction.

2. Navigation method according to claim 1, **characterised in that** the audio signals are generated from the at least four different source directions (20, 22, 24, 26) by an output unit with at least three loudspeakers (12, 14, 16, 18).

3. Navigation method according to one of the preceding claims, **characterised in that** a source direction perceived by the driver is "front right" or "right" or "rear right" or "front left" or "left" or "rear left".

4. Navigation device for a motor vehicle for carrying out a navigation method according to one of claims 1 to 3.

## Revendications

1. Procédé de navigation pour un véhicule à moteur, des instructions de roulage étant fournies sous forme de signaux audio, les signaux audio agissant sur le conducteur depuis au moins quatre directions de source (20, 22, 24, 26) différentes, discernables pour un conducteur, les au moins quatre directions de source (20, 22, 24, 26) étant en une relation de contenu envers les instructions de roulage chaque fois délivrées sous forme de signaux audio dans ces directions de source (20, 22, 24, 26), un signal audio comprenant chaque fois des signaux partiels,
**caractérisé en ce que**
les signaux partiels du signal audio, pour l'instruction de roulage, agissent en un ordre de succession temporelle depuis au moins deux directions de source différentes, de manière que soit donnée au conducteur l'impression que le signal audio soit produit depuis une direction de source qui se déplace constamment.

2. Procédé de navigation selon la revendication 1,
**caractérisé en ce que**
les signaux audio, produits à partir des au moins quatre directions de source (20, 22, 24, 26) différentes, sont produits par une unité d'édition comprenant au moins trois haut-parleurs (12, 14, 16, 18).

3. Procédé de navigation selon l'une des revendications précédentes,
**caractérisé en ce qu'**
une direction source, ressentie par le conducteur, est "en avant à droite" ou "à droite" ou "en arrière à droite" ou "en avant à gauche" ou "à gauche" ou "en arrière à gauche".

4. Dispositif de navigation pour un véhicule à moteur, pour la mise en oeuvre d'un procédé de navigation selon l'une des revendications 1 à 3.
